# EUROPEAN PATENT SPECIFICATION

(11) **EP 0 413 972 B1**
(45) Date of publication and mention of the grant of the patent: **12.10.1994**
(21) Application number: 90114041.8
(22) Date of filing: 23.07.1990
(51) Int. Cl.: C08L 71/12

(54) **Improved thermoplastic compositions which contain polyolefins and polyphenylene ethers, and articles made therefrom**
Polyolefine und Polyphenylenether enthaltende thermoplastische Zusammensetzungen und die daraus hergestellten Gegenstände
Compositions thermoplastiques contenant des polyoléfines et des polyéthers de phenylène et les articles à partir de celles-ci

(30) Priority: 18.08.1989 US 395831
(43) Date of publication of application: 27.02.1991
(73) Proprietor: GENERAL ELECTRIC COMPANY, Schenectady New York 12305 (US)
(72) Inventor: Lee, Jr., Gim Fun, Albany, New York 12203 (US)
(74) Representative: Pratt, Richard Wilson

(56) References cited:
- EP-A- 0 095 098
- EP-A- 0 243 761
- EP-A- 0 326 895
- US-A- 3 449 292
- US-A- 4 255 321
- US-A- 4 293 660
- US-A- 4 383 082
- US-A- 4 584 334

## Description

This invention relates generally to resinous compositions, and more particularly to thermoplastic blends containing polyphenylene ethers and polyolefins.

Polyphenylene ethers (also known as PPE) are a well-known class of engineering resins which exhibit excellent hydrolytic stability, dimensional stability, toughness, heat resistance, and dielectric properties.

In some applications, the overall performance of PPE resins can be enhanced by their admixture with polyolefins, as described, for example, in US-A-4,166,055, and in EP-A-0 358 898 and assigned to the assignee of the present application. As an illustration, the use of polyolefins can often improve the impact strength and chemical resistance of PPE-containing compositions.

Wire coatings represent one example of a commercial application in which the ductility and dielectric nature of PPE resins is an important attribute. US-A-4,808,647, for instance, describes curable mixtures which contain PPE and are useful for coating a copper or aluminum wire. The PPE acts in combination with an organic phosphate to enhance the flame retardancy of the coating, in addition to providing some of the other desirable properties mentioned above. Moreover, some PPE-containing compositions may be applied over a base layer of a polymer such as polyvinyl chloride, which has itself already been applied and cured on the metal conductor. The resulting coating structure still meets the physical and electrical requirements for many wire applications.

The increasing interest in wire coatings relates in part to the increasing use of electrical machinery and appliances in homes and businesses. Thus, safety concerns naturally arise, and are often directed to the integrity of the wire coating itself. The end result is a greater need for wire coatings - such as those containing PPE and polyolefin resins - which are much more durable than in the past. For example, they must continue to exhibit a high degree of flame retardance, preferably without using halogen-based agents which sometimes cause corrosion. Furthermore, these coatings must exhibit a high degree of flexibility and "elongation", i.e., the ability to expand and contract without cracking or breaking, even after exposure to high temperatures and/or severe temperature changes. Finally, other properties of the coatings must still be substantially retained, such as toughness and dielectric characteristics.

### SUMMARY OF THE INVENTION

The requirements described above have been satisfied by the compositions of the present invention, which comprise:
(a) polyphenylene ether resin;
(b) at least 20% by weight polyolefin resin, based on the weight of the entire composition;
(c) at least about 1% by weight an elastomeric block copolymer; and
(d) at least one phosphite compound present in an amount effective to increase the tensile elongation of articles formed from said compositions, by at least about 20% in comparison to that achieved in the absence of the phosphite, when determined according to U.L. 1581.

As described below, these compositions exhibit attractive characteristics, such as high tensile elongation and good flame retardance.

### DETAILED DESCRIPTION OF THE INVENTION

PPE resins are generally well-known in the art, and readily available. Many of them are described in US-A-3,306,874; 3,306,875; and 3,432,469 of Allan Hay; US-A-3,257,357 and 3,257,358 of Gelu Stamatoff; and US-A-4,806,602 of Dwain M. White et al.,. Both homopolymer and copolymer polyphenylene ethers are within the scope of this invention.

The preferred PPE resins are homo- and copolymers which comprise a plurality of structural units of the formula: 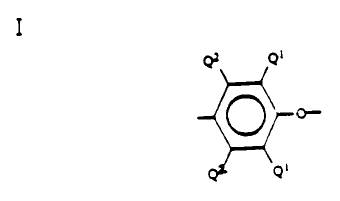
wherein each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably any alkyl radicals are straight chain rather than branched. Most often, each Q¹ is alkyl or phenyl, especially C₁₋₄ alkyl, and each Q² is hydrogen. Suitable polyphenylene ethers are disclosed in a large number of patents.

Especially preferred polyphenylene ethers will be comprised of units derived from 2,6-dimethyl phenol. Also contemplated are PPE copolymers comprised of units derived from 2,6-dimethyl phenol and 2,3,6-trimethyl phenol.

In some embodiments, these compositions may further include vinyl aromatic materials, which are known in the art and described, for example, in US-A-3,383,435; 4,593,058, and 4,661,560,. These materials are sometimes referred to as polyalkenyl aromatics. Non-limiting examples of the polyalkenyl aromatics are homopolymers such as polystyrene and monochloropolystyrene, as well as modified styrene resins, such as rubber-modified polystyrene (HIPS), the styrene-containing copolymers such as the styrene-acrylonitrile copolymers (SAN), styrene-butadiene copolymers, styrene-acrylonitrile-alpha-alkyl styrene copolymers, styrene-acrylonitrile-butadiene copolymers (ABS), poly-alpha-methylstyrene, copolymers of ethylvinylbenzene and divinylbenzene, copolymers of styrene and maleic anhydride, and copolymers of styrene and EPDM (a terpolymer elastomer made from ethylene-propylene diene monomer). Rubber-modified high impact polystyrene is the preferred polyalkenyl aromatic material. A preferred amount of polyalkenyl aromatic material is about 35% to about 55% by weight, based on the weight of the entire composition.

Compositions of this invention further comprise at least one polyolefin resin. Such resins are generally known in the art and are described, for example, in the above-mentioned US-A-4,166,055, 4,584,334, 4,383,082, in EP-A-0,095,098, 0 358 898, and on page 836 of The Condensed Chemical Dictionary, Tenth Edition, Van Nostrand Reinhold Company. The polyolefin is usually a polymer formed from an olefin of the general formula CₙH₂ₙ. Homo- or copolymers may be used, as well as combinations of polyolefins.

Illustrative polyolefins are polyethylene, polypropylene, polyisobutylene, copolymers of ethylene and propylene, as well as copolymers of ethylene and organic esters such as ethylene vinyl acetate, ethylene ethyl acrylate, ethylene methyl acrylate, and the like. The preparation of these polyolefins is generally well-known in the art.

The preferred polyolefins are polyethylene, polypropylene and polybutylene. Especially preferred are low density polyethylene (LDPE), linear low density polyethylene (LLDPE), medium density polethylene (MDPE), high density polyethylene (HDPE), and high impact (rubber-modified) polypropylene.

The amount of polyolefin present in the composition should be at least about 20% by weight, based on the weight of the entire composition. In preferred embodiments, the level should be at least about 30% by weight, and in the most preferred embodiments, should be at least about 40% by weight.

Another component of this invention is an elastomeric block copolymer. The block copolymers are generally well-known in the art and described, for example, in US-A-4,080,356 of Gergen et al., US-A-4,166,055 and 4,584,334, and in EP-A-0,095,098. Examples of commercially available block copolymers are the Kraton® series of polymers, available from Shell Oil Company.

Preferred block copolymers for the present invention are characterized by an A-B, A-B-A', or (AB)ₘ-X structure, or mixtures of these structures, wherein A and A' are each polymerized vinyl aromatic hydrocarbon blocks, each B is a hydrogenated, partially hydrogenated, or non-hydrogenated block derived from at least one polymerized conjugated diene, X is the radical of a multifunctional coupling agent, and m is an integer of at least 2. The block polymers preferably contain between about 15 and 50% by weight of vinyl aromatics.

In some preferred embodiments, A and A' are independently selected from the group consisting of styrene, alpha-methyl styrene, para-methyl styrene, vinyl toluene, vinyl xylene, and vinyl napthalene; and B is selected from the group consisting of butadiene, isoprene, ethylene, butylene, 1,3-pentadiene, 2,3-dimethyl butadiene, and combinations thereof.

Each block A and A' usually has a molecular weight in the range of about 2000 to 100,000, while each block B usually has a molecular weight in the range of about 25,000 to 1,000,000.

An especially preferred elastomeric block copolymer for this invention comprises blocks of styrene and ethylene-butylene, and is often referred to as "SEBS".

The preparation of elastomeric block copolymers is known in the art and can be effected, for example, by successive polymerization of the monomers in solution in the presence of a monolithium hydrocarbon initiator.

Furthermore, the olefinic double bonds of the block copolymers can be selectively hydrogenated in any conventional manner, e.g., the use of molecular hydrogen and catalysts based on metals or salts of metals of group VIII of the Periodic Table. Further aspects of the preparation of the elastomeric block copolymers can be found in EP-A-0,095,098, in US-A-3,113,986 and 3,700,633, in DE-A-1,222,260, and in DE-A-2,013,263.

The elastomeric block copolymer is used in an amount which enhances some of the properties of these compositions. This amount is usually at least about 1% by weight, based on the weight of the entire composition. More preferably, the block copolymer level is at least about 5% by weight, and most preferably, at least about 15% by weight. The exact amount will of course depend on several factors, such as the particular composition of the compatibilizer and the type of polyolefin being used.

The phosphite compound used in the present invention can be of various types, such as alkyl phosphites, aryl phosphites, alkyl-aryl phosphites, diphosphites, polyphosphites, and thiophosphites. Many are disclosed in US-A-4,659,760 and 4,472,546. Examples of suitable phosphites are triphenyl phosphite, diphenyl phosphite, trimesityl phosphite, dimesityl-phenyl phosphite, trineopentyl phosphite, didecylphenyl phosphite, dichloroethyl phosphite, tributyl phosphite, trilauryl phosphite, tris(nonylphenyl) phisphite, tridecyl phosphite, diphenyldecyl phosphite, tricresyl phosphite, triisooctyl phosphite, tri-2-ethylhexyl phosphite, trioctadecyl phosphite, thiophosphite, phenyldiethyl phosphite, phenyl-di-(2-ethylhexyl) phosphite, isooctyldiphenyl phosphite, diisooctylmonophenyl phosphite, distearyl pentaerythritol diphosphite, octadecyl 3-(3,5-di-t-butyl-4 hydroxyphenyl) propionate (eg., ULTRANOX® 276 additive), bis(2,4-di-t-butylphenyl) pentaerythritol diphosphite (commercially available as ULTRANOX® 626 or ULTRANOX® 624), diphenyl isooctyl phosphite, diisooctyl phosphite, distearyl phosphite, diphenylisodecyl phosphite, diisodecyl pentaerythritol diphosphite, poly(dipropylene glycol) phenyl phosphite, and trilauryl trlthiophosphite, as well as mixtures of the above.

The phosphite compound is present In an amount effective to substantially increase the tensile elongation of materials made from these compositions. A "substantial" increase is defined here as an increase in tensile elongation of at least about 20%, as determined according to UL 1581, compared to the materials without the phosphite. A part of this invention is the discovery that relatively small amounts of the phosphite compound are required for unusually high increases in tensile elongation in the particular compositions described herein. Furthermore, these compositions surprisingly maintain the high tensile elongation values after being heat-aged.

The effective amount of phosphite compound is usually at least about 0.01% by weight, based on the weight of the entire composition. A more preferred amount for many requirements, especially when the composition of this invention is used as a wire coating, is at least about 0.1%. Usually, the phosphite is used in a quantity no greater than about 10%. The most appropriate range can be determined according to various factors, such as the contemplated end use for the product, as well as the particular identity of the other components in the composition.

In some embodiments, a plasticizer is included in the composition. Suitable plasticizers include phosphate compounds, mineral oil, low-melting solids such as phthalate, adipate, and sebacate esters; polyols such as ethylene glycol, and the like.

The aromatic phosphates are the preferred plasticizers. Examples include triphenyl phosphate, isopropylated triphenyl phosphate, and isobutylated triphenyl phosphate, as well as mixtures of these materials. The aromatic phosphates are usually used at up to about 25% by weight, based on the weight of the entire composition. A preferred level is about 1% by weight to about 15% by weight.

A wide variety of other additives may be included in the compositions of this invention, their utility being of course dependent in part on the contemplated end use for the compositions. Non-limiting examples of these additives include flame retardants, reinforcing agents such as fibrous glass and graphite whiskers, antioxidants, mold release agents, mineral fillers, pigments, dyes, abrasion resistant compounds, and the like. These additives are usually included in amounts of between about 1% and 50% by weight of the total composition.

These compositions can be prepared by well-known procedures. Often, the ingredients are combined as a pre-mix blend, and then extruded on a single or twin screw extruder.

Another aspect of this invention is an improved electrical conductor article, which includes a coating material comprising the components set forth above, i.e., PPE, polyolefin, elastomeric block copolymor, and phosphite compound, applied over the surface of an electrical conductor, for example, copper or aluminum wire or cable. (Sometimes, the conductor is first coated with a material which inhibits or prevents oxidation). The coating composition can be applied by known methods, such as extrusion, followed by cooling. The coating thus forms an excellent electric-insulator for the metal. If desirable, one or more outer or "jacket" layers may be formed over the coating. These layers are also often formed of a polymeric material, such as polyvinyl chloride, a polyester like polybutylene terephthalate, or a polyamide, and can also be applied by extrusion techiques, such as tandem extrusion.

Alternatively, the coating composition of this invention may be used itself as a jacket layer applied over a wire insulating material such as polyvinyl chloride.

It should be understood that the composition of this invention is not limited for use as a coating material. It may be used to form any type of molded article where excellent tensile elongation and flame retardance are desirable.

The following examples are provided to illustrate various embodiments of this invention. It is to be understood, however, that the embodiments are given for the purpose of illustration only, and do not and should not be regarded as limiting the invention to any of the specific materials or conditions described therein.

### EXAMPLES

The compositions set forth in Table 1 were prepared by dry-blending the ingredients and then melt-blending the mix, using a single screw extruder. All values are by weight, unless otherwise indicated.

The extrudate was quenched and pelletized, and then remelted in an extruder equipped with a die for coating wires. The molten polymer was thereby applied to a copper wire.

Tensile tests were performed on the material after it was stripped from the wire. Some of the material was heat-aged for 7 days at 136°C and then cooled at room temperature for about 24 hours before being tested for tensile characteristics.

As mentioned above, the tensile values set forth below were determined by UL 1581.

Samples 2,3,5 and 6 are part of the present invention; while samples 1 and 4 are controls.

**TABLE 1**

| Example No. | Elastomeric^{(c)} | | | | | Tensile Values^{(g)} | | | |
|---|---|---|---|---|---|---|---|---|---|
| | Block | | | | | Initial^{(f)} | | After Heat Aging^{(h)} | |
| | PPE | Phosphite^{(b)} | Copolymer | Polyolefin^{(d)} | Phosphate^{(e)} | T.S. | T.E. | T.S. | T.E. |
| 1* | 30^{(a)} | 0.0 | 20 | 50 | 10 | 3.1 | 158 | 4.3 | 176 |
| 2 | 30 | 0.5 | 20 | 50 | 10 | 3.7 | 242 | 4.8 | 216 |
| 3 | 30 | 0.5 | 20 | 50 | 10 | 4.0 | 243 | 5.5 | 228 |
| 4* | 30 | 0.0 | 20 | 50 | 10 | --- | 145 | --- | 144 |
| 5 | 30 | 0.5 | 20 | 50 | 10 | --- | 204 | --- | 195 |
| 6 | 10 | 0.5 | 20 | 50 | 10 | --- | 197 | --- | 215 |

| | | | | | | | | | |
|---|---|---|---|---|---|---|---|---|---|
| *Controls | | | | | | | | | |
| (a) All values in parts by weight | | | | | | | | | |
| (b) Samples 2, 5: Tridecyl Phosphite Samples 3, 6: Bis (2,4-di-t-butylphenyl) pentaerythritol diphosphite | | | | | | | | | |
| (c) Styrene-Ethylene-Butylene-Styrene Block Copolymer | | | | | | | | | |
| (d) Linear Low Density Polyethylene | | | | | | | | | |
| (e) Triphenyl Phosphate | | | | | | | | | |
| (f) "TS" = Tensile Strength; "TE" = Tensile Elongation | | | | | | | | | |
| (g) Tensile Values Determined According to UL 1581 | | | | | | | | | |
| (h) Heat Aging for 7 Days at 136°C | | | | | | | | | |

The data in Table 1 demonstrate that the addition of phosphites to the compositions resulted in a very large increase in tensile elongation. Furthermore, the increase was generally maintained after heat aging of the samples.

Modifications and variations of the present invention are possible in light of the above teachings. It is understood, however, that such changes are within the intended scope of this invention, as defined by the appended claims.

## Claims

1. A thermoplastic composition comprising:
a) polyphenylene ether resin;
b) at least 20% by weight polyolefin resin, based on the weight of the entire composition;
c) at least 1% by weight of an elastomeric block copolymer, based on the weight of the entire composition; and
d) a phosphite compound present in an amount effective to increase the tensile elongation of articles formed from said compositions, by at least 20% in comparison to that achieved in the absence of the phosphite, when determined according to UL 1581.

2. The composition of claim 1, wherein the polyphenylene ether comprises a plurality of structural units of the formula: 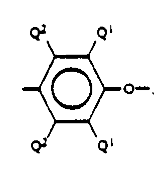 and in each of said units independently, each Q¹ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹.

3. The composition of claim 2 wherein each Q¹ is an alkyl group having from 1 to 4 carbon atoms, and each Q² is hydrogen.

4. The composition of claim 2 wherein the polyphenylene ether is derived from the group consisting of 2,6-xylenol, 2,3,6-trimethylphenol, and mixtures of these materials.

5. The composition of claim 2 wherein the polyphenylene ether is poly(2,6-dimethyl-1,4-phenylene ether).

6. The composition of claim 1 wherein the polyolefin resin is selected from the group consisting of low density polyethylene, linear low density polyethylene, medium density polyethylene, high density polyethylene, polypropylene, rubber-modified polypropylene, ethylene vinyl acetate, ethylene ethyl acrylate, ethylene methyl acrylate, and mixtures of any of the foregoing.

7. The composition of claim 1 wherein the polyolefin level is at least 30% by weight, based on the weight of the entire composition.

8. The composition of claim 7 wherein the polyolefin level is at least 40% by weight, based on the weight of the entire composition.

9. The composition of claim 1 wherein the elastomeric block copolymer is present in an amount of at least 5% by weight, based on the weight of the entire composition.

10. The composition of claim 1 wherein the elastomeric block copolymer is characterized by an A-B, A-B-A', or (A-B)ₘ-X structure, or mixtures of these structures, and A and A' are each polymerized vinyl aromatic hydrocarbon blocks, each B is a hydrogenated or non-hydrogenated block derived from a polymerized conjugated diene, X is the radical of a multifunctional coupling agent, and m is an integer of at least 2.

11. The composition of claim 10 wherein A and A' are independently selected from the group consisting of styrene, alpha-methyl styrene, para-methyl styrene, vinyl toluene, vinyl xylene, and vinyl napthalene; and B is selected from the group consisting of butadiene, isoprene, 1,3-pentadiene, and 2,3-dimethyl butadiene.

12. The composition of claim 10 wherein the elastomeric block copolymer comprises blocks of styrene and ethylene-butylene.

13. The composition of claim 1 wherein the phosphite compound is present In an amount of at least 0.01% by weight, based on the weight of the entire composition.

14. The composition of claim 13 wherein the phosphite level is at least 0.1% by weight, based on the weight of the entire composition.

15. The composition of claim 13 wherein the amount of phosphite compound is in the range of 0.01% to 10% by weight, based on the weight of the entire composition.

16. The composition of claim 1 wherein the phosphite compound is selected from the group consisting of alkyl phosphites, aryl phosphites, alkyl-aryl phosphites, diphosphites, polyphosphites, thiophosphites, and mixtures of any of the foregoing.

17. The composition of claim 16 wherein the phosphite compound is selected from the group consisting of triphenyl phosphite, tridecyl phosphite, triisodecyl phosphite, diphenyl phosphite, diisooctyl phosphite, distearyl phosphite, bis(2,4-di-t-butylphenyl) pentaerythritol diphosphite, distearyl pentaerythritol diphosphite, and mixtures of any of the foregoing.

18. The composition of claim 1, further comprising a vinyl aromatic polymer.

19. The composition of claim 1, further comprising a plasticizer.

20. The composition of claim 19 wherein the plasticizer is selected from the group consisting of phosphate compounds, mineral oil, polyols, phthalate esters, adipate esters, sebacate esters, and mixtures of any of the foregoing.

21. The composition of claim 20 wherein the plasticizer is selected from the group consisting of triphenyl phosphate, isopropylated triphenyl phosphate, isobutylated triphenyl phosphate, and mixtures of any of the foregoing.

22. The composition of claim 1, further comprising a reinforcing agent.

23. The composition of claim 22 wherein the reinforcing agent is glass.

24. An improved electrically conductive article, comprising:
a) an electrical conductor;
b) a coating disposed over the conductor, and formed from a composition which comprises:
i) polyphenylene ether resin;
ii) at least 20% by weight polyolefin resin, based on the weight of the entire composition;
iii) at least 1% by weight of an elastomeric block copolymer, based on the weight of the entire composition; and
iv) a phosphite compound present in an amount effective to increase the tensile elongation of the coating, by at least 20% in comparison to that achieved in the absence of the phosphite, when determined according to UL 1581.

25. The article of claim 24, wherein the coating is applied directly to the conductor surface.

26. The article of claim 25, wherein an outer layer of a polymeric material is disposed on the surface of the coating.

27. The article of claim 24, wherein the coating is applied over an insulating layer of a polymeric material which itself is applied directly on the conductor surface.

28. The article of claim 24, wherein the composition further comprises a material selected from the group consisting of phosphate compounds, mineral oil, polyols, phthalate esters, adipate esters, sebacate esters, and mixtures of any of the foregoing.

## Patentansprüche

1. Thermoplastische Zusammensetzung enthaltend:
a) Polyhenylenätherharz;
b) wenigstens 20 Gew.-% Polyolefinharz, basierend auf dem Gewicht der gesamten Zusammensetzung;
c) wenigstens 1 Gew.-% eines elastomeren Blockcopolymeren, basierend auf dem Gewicht der gesamten Zusammensetzung und
d) einer Phosphit-Verbindung, die in einer Menge vorhanden ist, welche wirksam ist, um die Zugdehnung der Gegenstände, die aus den Zusammensetzungen gebildet sind, um wenigstens 20 % zu erhöhen im Vergleich zu dem Wert, der in Abwesenheit des Phosphits bei der Bestimmung gem. UL 1581 erhalten wird.

2. Zusammensetzung nach Anspruch 1, worin der Polyphenylenäther eine Vielzahl von Struktureinheiten der Formel 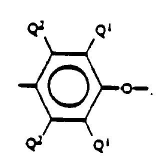 umfaßt, und in jeder dieser Einheiten unabhängig jedes Q¹ unabhängig Halogen, primäres oder sekundäres niederes Alkyl, Phenyl, Halogenalkyl, Aminoalkyl, Hydrocarbonoxy oder Halogenhydrocarbonoxy, worin wenigstens 2 Kohlenstoffatome die Halogen- und Sauerstoffatome trennen, ist und jedes Q² unabhängig Wasserstoff, Halogen, primäres oder sekundäres niederes Alkyl, Phenyl, Halogenalkyl, Hydrocarbonoxy oder Halogenhydrocarbonoxy wie für Q¹ definiert, ist.

3. Zusammensetzung nach Anspruch 2, worin jedes Q¹ eine Alkyl-Gruppe mit 1 bis 4 Kohlenstoffatomen und jedes Q² Wasserstoff ist.

4. Zusammensetzung nach Anspruch 2, worin der Polyphenylenäther abgeleitet ist aus der Gruppe bestehend aus 2,6-Xylenol, 2,3,6-Trimethylphenol und Mischungen dieser Materialien.

5. Zusammensetzung nach Anspruch 2, worin der Polyphenylenäther Poly(2,6-Dimethyl-1,4-Phenylenäther) ist.

6. Zusammensetzung nach Anspruch 1, worin das Polyolefinharz ausgewählt ist aus der Gruppe bestehend aus Polyethylen niederer Dichte, lineares Polyethylen niederer Dichte, Polyehtylen mittlerer Dichte, Polyethylen hoher Dichte, Polypropylen, gummimodifiziertem Polypropylen, Ethylen-Vinyl-Acetat, Ethylen-Ethyl-Acrylat, Ethylen-Methyl-Acrylat und Mischungen aus beliebigen der vorgenannten Stoffe.

7. Zusammensetzung nach Anspruch 1, worin der Polyolefin-Gehalt wenigstens 30 Gew.-%, bezogen auf das Gewicht der gesamten Zusammensetzung, beträgt.

8. Zusammensetzung nach Anspruch 7, worin der Polyolefin-Gehalt wenigstens 40 Gew.-%, bezogen auf das Gewicht der gesamten Zusammensetzung, beträgt.

9. Zusammensetzung nach Anspruch 1, worin das elastomere Blockcopolymer in einer Menge von wenigstens 5 Gew.-%, bezogen auf das Gewicht der gesamten Zusammensetzung, anwesend ist.

10. Zusammensetzung nach Anspruch 1, worin das elastomere Blockcopolymer gekennzeichnet ist durch eine A-B, A-B-A' oder (A-B)ₘ-X Struktur oder Mischungen dieser Strukturen und A und A' jeweils polymerisierte vinylaromatische Kohlenwasserstoffblöcke sind, jedes B ein hydrierter oder nicht-hydrierter Block ist, der von einem polymerisierten, konjugierten Dien abgeleitet ist, X der Rest eines multifunktionellen Kupplungsmittels ist und m eine ganze Zahl von wenigstens 2 ist.

11. Zusammensetzung nach Anspruch 10, worin A und A' unabhängig voneinander ausgewählt sind aus der Gruppe bestehend aus Styrol, Alpha-Methyl-Styrol, Para-Methyl-Styrol, Vinyl-Toluol, Vinyl-Xylol und Vinyl-Napthalin; und B ausgewählt ist aus der Gruppe bestehend aus Butadien, Isopren, 1,3-Pentadien und 2,3-Dimethyl-Butadien.

12. Zusammensetzung nach Anspruch 10, worin das elastomere Blockcopolymer Blöcke aus Styrol und Ethylen-Butylen umfaßt.

13. Zusammensetzung nach Anspruch 1, worin die Phosphit-Verbindung in einer Menge von wenigstens 0,01 Gew.-%, bezogen auf das Gewicht der gesamten Zusammensetzung, vorhanden ist.

14. Zusammensetzung nach Anspruch 13, worin der Phosphit-Gehalt wenigstens 0,1 Gew.-%, bezogen auf das Gewicht der gesamten Zusammensetzung, beträgt.

15. Zusammensetzung nach Anspruch 13, worin die Menge der Phosphit-Verbindung im Bereich o,o1 bis 10 Gew.-%, bezogen auf das Gewicht der gesamten Zusammensetzung, beträgt.

16. Zusammensetzung nach Anspruch 1, worin die Phosphit-Verbindung ausgewählt ist aus der Gruppe bestehend aus Alkyl, Phosphiten, Aryl-Phosphiten, Alkyl-Aryl-Phosphiten, Diphosphiten, Polyphosphiten, Thiophosphiten und Mischungen aus beliebigen der vorgenannten Stoffe.

17. Zusammensetzung nach Anspruch 16, worin die Phosphit-Verbindung ausgewählt ist aus der Gruppe bestehend aus Triphenyl-Phosphit, Tridecyl-Phosphit, Triisodecyl-Phosphit, Diphenyl-Phosphit, Diisooctyl-Phosphit, Distearyl-Phosphit, Bis(2,4-di-t-butylphenyl) pentaerythritol-Diphosphit, Distearyl-Pentaerythritol-Diphosphit und Mischungen aus beliebigen der vorgenannten Stoffe.

18. Zusammensetzung nach Anspruch 1, die weiterhin ein venyl-aromatisches Polymer enthält.

19. Zusammensetzung nach Anspruch 1, die weiterhin einen Weichmacher enthält.

20. Zusammensetzung nach Anspruch 19, worin der Weichmacher ausgewählt ist aus der Gruppe bestehend aus Phosphat-Verbindungen, Mineral-Oel, Polyolen, Phthalat-Estern, Adipat-Estern, Sebacat-Estern und Mischungen aus beliebigen der vorgenannten Stoffe.

21. Zusammensetzung nach Anspruch 20, worin der Weichmacher ausgewählt ist aus der Gruppe bestehend aus Triphenyl-Phosphat, isopropyliertem Triphenyl-Phosphat, isobutyliertem Triphenyl-Phosphat und Mischungen aus beliebigen der vorgenannten Stoffe.

22. Zusammensetzung nach Anspruch 1, die weiterhin ein verstärkendes Mittel enthält.

23. Zusammensetzung nach Anspruch 22, worin das verstärkende Mittel Glas ist.

24. Verbesserter elektrisch-leitfähiger Gegenstand enthaltend:
a) einen elektrischen Leiter;
b) Beschichtung, die auf den Leiter angeordnet ist und auf einer Zusammensetzung gebildet ist, die umfaßt:
i) Polyphenylenätherharz;
ii) wenigstens 20 Gew.-% Polyolefinharz, bezogen auf das Gewicht der gesamten Zusammensetzung;
iii) wenigstens 1 Gew.-% eines elastomeren blockcopolymeren, basierend auf dem Gewicht der gesamten Zusammensetzung und
iv) eine Phosphit-Verbindung, die in einer Menge vorhanden ist, welche wirksam ist, um die Zugdehnung der Gegenstände, die aus den Zusammensetzungen gebildet sind, um wenigstens 20% zu erhöhen im Vergleich zu dem Wert, der in Abwesenheit des Phosphits bei der Bestimmung gem. UL 1581 erhalten wird.

25. Gegenstand nach Anspruch 24, worin der Überzug direkt auf der Leiteroberfläche aufgebracht ist.

26. Gegenstand nach Anspruch 25, worin eine äußere Schicht aus einem Polymer-Material auf der Oberfläche der Beschichtung aufgebracht ist.

27. Gegenstand nach Anspruch 24, worin die Beschichtung auf einer isolierenden Schicht eines polymeren Materials aufgebracht ist, die selbst direkt auf den Leiter aufgebracht ist.

28. Gegenstand nach Anspruch 24, worin die Zusammensetzung weiterhin ein Material umfaßt, welches ausgewählt ist aus der Gruppe bestehend aus Phosphat-Verbindungen, Mineral-Oel, Polyolen, Phthalat-Estern, Adipat-Estern, Sebacat-Estern und Mischungen aus beliebigen der vorgenannten Stoffe.

## Revendications

1. Composition thermoplastique comprenant :
a) une résine de type poly(phénylène éther),
b) au moins 20 % en poids de résine de type polyoléfine, par rapport au poids total de la composition,
c) au moins 1 % en poids d'un copolymère séquencé élastomère, par rapport au poids total de la composition, et
d) un composé de type phosphite, présent en une quantité permettant d'augmenter l'allongement à la traction d'articles formés de ladite composition, d'au moins 20 % par rapport à ce que l'on obtient en l'absence de phosphite, quand on détermine ce paramètre d'après la norme UL 1581.

2. Composition conforme à la revendication 1, dans laquelle le poly(phénylène éther) comporte de multiples motifs structuraux de formule : 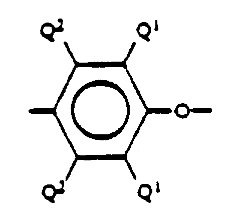 dans laquelle, indépendamment dans chacun de ces motifs, chaque Q¹ représente indépendamment un atome d'halogène ou un groupe alkyle inférieur primaire ou secondaire, phényle, halogénoalkyle, aminoalkyle, hydrocarboné-oxy ou halogénohydrocarboné-oxy où au moins deux atomes de carbone séparent les atomes d'halogène et d'oxygène, et chaque Q² représente indépendamment un atome d'hydrogène ou d'halogène ou un groupe alkyle inférieur primaire ou secondaire, phényle, halogénoalkyle, hydrocarboné-oxy ou halogénohydrocarboné-oxy tel qu'on l'a défini à propos de Q¹.

3. Composition conforme à la revendication 2, dans laquelle chaque Q¹ représente un groupe alkyle comportant de 1 à 4 atomes de carbone et chaque Q² représente un atome d'hydrogène.

4. Composition conforme à la revendication 2, dans laquelle le poly(phénylène éther) dérive d'un composé choisi parmi le 2,6-xylénol et le 2,3,6-triméthylphénol, ou d'un mélange de ces composés.

5. Composition conforme à la revendication 2, dans laquelle le poly(phénylène éther) est du poly(2,6-di-méthyl-1,4-phényléne éther).

6. Composition conforme à la revendication 1, dans laquelle la résine de type polyoléfine est choisie dans le groupe constitué par un polyéthylène basse densité, un polyéthylène basse densité linéaire, un polyéthylène moyenne densité, un polyéthylène haute densité, un polypropylène, un polypropylène modifié par un caoutchouc, un copolymère d'éthylène et d'acétate de vinyle, un copolymère d'éthylène et d'acrylate d'éthyle, un copolymère d'éthylène et d'acrylate de méthyle, et des mélanges de n'importe lesquels des polymères précédents.

7. Composition conforme à la revendication 1, dans laquelle la proportion de polyoléfine vaut au moins 30 % en poids, par rapport au poids total de la composition.

8. Composition conforme à la revendication 7, dans laquelle la proportion de polyoléfine vaut au moins 40 % en poids, par rapport au poids total de la composition.

9. Composition conforme à la revendication 1, dans laquelle le copolymère séquencé élastomère se trouve en une proportion d'au moins 5 % en poids, par rapport au poids total de la composition.

10. Composition conforme à la revendication 1, dans laquelle le copolymère séquencé élastomère possède une structure A-B, A-B-A' ou (A-B)ₘ-X, ou une combinaison de ces structures, A et A' représentant chacun des séquences d'hydrocarbure vinyl-aromatique polymérisé, chaque B représentant une séquence, hydrogénée ou non, dérivée d'un diène conjugué polymérisé, X représentant le reste d'un agent de couplage multifonctionnel, et m représentant un nombre entier valant au moins 2.

11. Composition conforme à la revendication 10, dans laquelle A et A' dérivent de monomères indépendamment choisis dans le groupe constitué par le styrène, l'α-méthylstyrène, le para-méthylstyrène, le vinyltoluène, le vinylxylène et le vinylnaphtalène, et B dérive de monomères choisis dans le groupe constitué par le butadiène, l'isoprène, le 1,3-pentadiène et le 2,3-diméthylbutadiène.

12. Composition conforme à la revendication 10, dans laquelle le copolymère séquencé élastomère est constitué de séquences de styrène et d'éthylène-butylène.

13. Composition conforme à la revendication 1, dans laquelle le composé de type phosphite se trouve en une proportion d'au moins 0,01 % en poids, par rapport au poids total de la composition.

14. Composition conforme à la revendication 13, dans laquelle la proportion de phosphite vaut au moins 0,1 % en poids, par rapport au poids total de la composition.

15. Composition conforme à la revendication 13, dans laquelle la proportion de composé de type phosphite se trouve dans l'intervalle allant de 0,01 % à 10 % en poids, par rapport au poids total de la composition.

16. Composition conforme à la revendication 1, dans laquelle le composé de type phosphite est choisi dans le groupe constitué par les phosphites d'alkyle, les phosphites d'aryle, les phosphites d'alkyle et d'aryle, les diphosphites, les polyphosphites, les thiophosphites, et les mélanges de n'importe lesquels des composés précédents.

17. Composition conforme à la revendication 16, dans laquelle le composé de type phosphite est choisi dans le groupe constitué par le phosphite de triphényle, le phosphite de tridécyle, le phosphite de triisodécyle, le phosphite de diphényle, le phosphite de diisooctyle, le phosphite de distéaryle, le diphosphite de pentaérythritol et de bis(2,4-di-t-butylphényle), le diphosphite de pentaérythritol et de distéaryle, et des mélanges de n'importe lesquels des composés précédents.

18. Composition conforme à la revendication 1, qui contient en outre un polymère vinyl-aromatique.

19. Composition conforme à la revendication 1, qui contient en outre un plastifiant.

20. Composition conforme à la revendication 19, dans laquelle le plastifiant est choisi dans le groupe constitué par les composés de type phosphite, l'huile minérale, les polyols, les esters phtalate, les esters adipate, les esters sébaçate et les mélanges de n'importe lesquels des composés précédents.

21. Composition conforme à la revendication 20, dans laquelle le plastifiant est choisi dans le groupe constitué par le phosphate de triphényle, un phosphate de triphényle isopropylé, un phosphate de triphényle isobutylé, et des mélanges de n'importe lesquels des composés précédents.

22. Composition conforme à la revendication 1, qui contient en outre un agent de renfort.

23. Composition conforme à la revendication 22, dans laquelle l'agent de renfort est un verre.

24. Article électriquement conducteur amélioré, comprenant :
a) un conducteur électrique ;
b) un revêtement disposé sur ce conducteur et formé d'une composition qui comprend :
i) une résine de type poly(phénylène éther),
ii) au moins 20 % en poids de résine de type polyoléfine, par rapport au poids total de la composition,
iii) au moins 1 % en poids d'un copolymère séquencé élastomère, par rapport au poids total de la composition, et
iv) un composé de type phosphite, présent en une quantité permettant d'augmenter l'allongement à la traction d'articles formés de ladite composition, d'au moins 20 % par rapport à ce que l'on obtient en l'absence de phosphite, quand on détermine ce paramètre d'après la norme UL 1581.

25. Article conforme à la revendication 24, dans lequel le revêtement est appliqué directement sur la surface du conducteur.

26. Article conforme à la revendication 25, dans lequel une couche externe de matériau polymère est placée sur la surface du revêtement.

27. Article conforme à la revendication 24, dans lequel le revêtement est appliqué par-dessus une couche isolante constituée d'un matériau polymère, qui est elle-même appliquée directement sur la surface du conducteur.

28. Article conforme à la revendication 24, dans lequel la composition comprend en outre une substance choisie dans le groupe constitué par les composés de type phosphate, l'huile minérale, les polyols, les esters phtalate, les esters adipate, les esters sébaçate, et les mélanges de n'importe lesquelles des substances précédentes.
